# EUROPÄISCHE PATENTSCHRIFT

(11) **EP 0 755 988 B1**
(45) Veröffentlichungstag und Bekanntmachung des Hinweises auf die Patenterteilung: **10.03.1999**
(21) Anmeldenummer: 96111592.0
(22) Anmeldetag: 18.07.1996
(51) Int. Cl.: C09D 11/18

(54) **Phthalocyaninpigmente enthaltende Kugelschreiberpasten**
Ballpoint pen inks containing phthalocyanin pigments
Composition d'encre pour stylo à bille contenant des pigments de phthalocyanine

(30) Priorität: 27.07.1995 DE 19527372
(43) Veröffentlichungstag der Anmeldung: 29.01.1997
(73) Patentinhaber: BASF AKTIENGESELLSCHAFT, 67056 Ludwigshafen (DE)
(72) Erfinder: Beck, Karin Heidrun, Dr., 67067 Ludwigshafen (DE); Bellaire, Helmut, 67069 Ludwigshafen (DE); Czech, Erwin, Dr., 68647 Biblis (DE); Kurtz, Walter, Dr., 67098 Bad Dürkheim (DE)

(56) Entgegenhaltungen:
- EP-A- 0 687 717
- WO-A-83/01625
- WO-A-84/00174
- DE-A- 1 519 138

## Beschreibung

Die vorliegende Erfindung betrifft ein neues Verfahren zur Herstellung von Kugelschreiberpasten, welche ein Phthalocyaninpigment und für Kugelschreiberpasten übliches Harz und organisches Lösungsmittel als wesentliche Komponenten sowie gewünschtenfalls weitere übliche Zusatzstoffe enthalten.

Kugelschreiberpasten bestehen üblicherweise aus Lösungen von Farbstoffen in hochsiedenden Lösungsmitteln, denen zur Verbesserung der Echtheiten und zur Einstellung der erforderlichen Viskosität (in der Regel 7 bis 20 Pa·s) Harze zugesetzt werden, und sind im wesentlichen wasserfrei.

Diese Kugelschreiberpasten vermögen jedoch die Anforderungen in verschiedener Hinsicht nicht zu befriedigen. Insbesondere läßt ihre Dokumentenechtheit oft zu wünschen übrig.

In der nicht vorveröffentlichten DE-A-44 20 644 werden schwarze Kugelschreiberpasten beschrieben, die Magnetitteilchen enthalten und dokumentenecht sind. Aus den WO-A-84/00174 und 83/01625 sind Kugelschreiberpasten bekannt, die organische Pigmente enthalten, jedoch nicht dokumentenecht, sondern ausradierbar sind und auf vom erfindungsgemäßen Verfahren abweichende Weise hergestellt werden.

Der Erfindung lag die Aufgabe zugrunde, ein Verfahren zur Herstellung von dokumentenechten, Phthalocyaninpigmente enthaltenden Kugelschreiberpasten, bereitzustellen.

Demgemäß wurde ein Verfahren zur Herstellung von Kugelschreiberpasten, enthaltend ein Phthalocyaninpigment und für Kugelschreiberpasten übliches Harz und organisches Lösungsmittel als wesentliche Komponenten sowie gewünschtenfalls weitere übliche Zusatzstoffe gefunden, welches dadurch gekennzeichnet ist, daß man ein Phthalocyaninpigment in Gegenwart von Wasser in das Harz einknetet, das Wasser anschließend durch Dekantieren weitgehend entfernt, die abgekühlte Pigment/Harz-Präparation dann mahlt und in dem für die fertige Kugelschreiberpaste eingesetzten organischen Lösungsmittel dispergiert und dabei gewünschtenfalls weitere Zusatzstoffe zugibt.

Die in den erfindungsgemäß hergestellten Kugelschreiberpasten enthaltenen Phthalocyaninpigmente haben in der Regel Teilchengrößen von < 1 µm, bevorzugt von 50 bis 500 nm und besonders bevorzugt von 50 bis 100 nm. Ihre spezifische Oberfläche (BET) beträgt in der Regel 10 bis 50 m²/g. Die Teilchengröße wird üblicherweise durch elektronenmikroskopische Aufnahmen oder durch Röntgenbeugung bestimmt.

Als Phthalocyaninpigmente eignen sich neben metallfreiem Phthalocyanin bevorzugt metallhaltige Phthalocyanine wie Kupferphthalocyanin, insbesondere β-Kupferphthalocyanin (C.I. Pigment Blue 15:3, auch 15:4), das bis zu 10 % α-Kupferphthalocyanin enthalten kann, vorzugsweise jedoch als reine β-Modifikation vorliegt.

Die erfindungsgemäß hergestellten Kugelschreiberpasten enthalten in der Regel 3 bis 30, insbesondere 10 bis 15 Gew.-%, Phthalocyaninpigment.

Ein weiterer für die Kugelschreiberpasten wesentlicher Bestandteil ist das Harz, das dazu dient, die gewünschte Viskosität, die im allgemeinen 7 bis 20 Pa·s, bevorzugt 8 bis 15 Pa·s, besonders bevorzugt 10 bis 13 Pa·s, beträgt, einzustellen.

Hier können alle für derartige Anwendungszwecke üblichen Harze zum Einsatz kommen. Beispielhaft seien insbesondere saure Phthalatharze, neutrale Aldehydharze und neutrale Ketonharze, die z.B. unter den Namen Phthalopal®NP (BASF), Kunstharze SK (Hüls), Laropal®A (BASF) und Alnovol®PN 320 (Hoechst) erhältlich sind, aufgeführt.

Geeignet sind z.B. auch Mischungen von neutralen Harzen, die polare Gruppen wie Hydroxygruppen aufweisen, und 33 bis 66 Gew.-%, bezogen auf die neutralen Harze, saure Harze enthalten, wobei solche Mischungen bevorzugt sind, in denen der neutrale Anteil überwiegt.

Üblicherweise liegt der Harzanteil in den erfindungsgemäß hergestellten Kugelschreiberpasten bei 15 bis 45, bevorzugt bei 20 bis 40 Gew.-%.

Für die erfindungsgemäß hergestellten Kugelschreiberpasten geeignete organische Lösungsmittel sind ebenfalls für diesen Zweck bekannte Verbindungen. Im einzelnen seien genannt:
- Alkohole: z.B. Tridecanol, Isotridecanol, vor allem Benzylalkohol;
- Etheralkohole: z.B. Glykolether wie 2-Methoxy-, 2-Ethoxy-, 2-Propoxy-, 2-Isopropoxy-, 2-Butoxy-, vor allem 2-Phenoxyethanol ("Phenylglykol"), auch 2- und 3-Methoxy-, 2- und 3-Etoxy-, 2- und 3-Propoxy-, 2- und 3-Isopropoxy-, 2- und 3-Butoxy- und 2- und 3-Phenoxypropanol;
- Diether: z.B. 1,2-Dimethoxy-, 1,2-Diethoxy-, 1,2-Dipropoxy-, 1,2-Diisopropoxy-, 1,2-Dibutoxy- und 1,2-Diphenoxyethan, 1,2-und 1,3-Dimethoxy-, 1,2- und 1,3-Diethoxy-, 1,2- und 1,3-Dipropoxy, 1,2- und 1,3-Diisopropoxy- und 1,2- und 1,3-Diphenoxypropan;
- aliphatische Carbonsäuren wie vor allem Olein, d.h. bei der Fettspaltung entstehende technische Ölsäure, die geringe Mengen an Stearinsäure, Palmitinsäure und anderen Fettsäuren enthalten kann;
- aromatische Carbonsäureester: z.B. Phthalsäure-di-(C₄-C₁₃-alkyl)ester wie Dibutyl-, Diisobutyl-, Di-sec.-butyl-, Dipentyl-, Diisopentyl-, Dihexyl-, Diheptyl-, vor allem Dioctyl-, Diisooctyl- und Bis(2-ethylhexyl)-, auch Dinonyl-, Diisononyl-, Didecyl-, Diisodecyl-, Diundecyl-, Didodecyl-, Ditridecyl- und Diisotridecylphthalat;
- Kohlenwasserstoffe: z.B. C₅-C₃₀-Chloralkane wie Chloreicosan und Chlortetracosan; C₁-C₂₀-Alkane, die zweifach durch Phenyl substituiert sind, wie Diphenyldecan und Diphenyltetradecan; Di-(C₁-C₁₀-alkyl)naphthaline wie Diisoproylnaphthalin; teilhydrierte Terphenyle.

Selbstverständlich können auch Mischungen dieser Lösungsmittel (z.B. Benzylalkohol/Phenylglykol-Gemische) eingesetzt werden.

In der Regel enthalten die erfindungsgemäß hergestellten Kugelschreiberpasten 40 bis 60, vorzugsweise 45 bis 55 Gew.-%, organisches Lösungsmittel.

Weiterhin können beim erfindungsgemäßen Herstellungsverfahren zur Einstellung einer Kugelschreiberpaste gewünschten Farbtons (insbesondere Blau, aber auch z.B. Schwarz und Violett) in organischem Lösungsmittel gelöste organische Farbstoffe oder Farbstoffmischungen zugesetzt werden.

Beispiele für geeignete Farbstoffe sind: Mischungen aus C.I. Solvent Violet 8, C.I. Solvent Blue 4 und C.I. Solvent Black 5, aus C.I. Solvent Violet 8 und C.I. Solvent Blue 64, aus C.I.

Solvent Violet 8, C.I. Solvent Blue 4 und C.I. Solvent Red 49 oder Mischungen von Methanilgelbsäure und Kristallviolettbase.

Geeignete Zusätze an diesen Farbstoffen betragen zweckmäßigerweise 1 bis 20 Gew.-%, bezogen auf die fertige Kugelschreiberpaste.

Beim erfindungsgemäßen Herstellungsverfahren wird das Pigment zunächst in das Harz eingearbeitet, und die erhaltene Pigment/Harz-Präparation wird nach einem Zerkleinerungsschritt mit dem organischen Lösungsmittel versetzt.

Verfahrenstechnisch geht man bei der Herstellung der besonders bevorzugten, feinteiliges β-Kupferphthalocyanin enthaltenden Kugelschreiberpasten vorteilhaft wie folgt vor:

Man knetet das Harz zunächst allein ca. 10 bis 15 min bei erhöhter Temperatur (etwa 80 bis 120°C). Dann gibt man zunächst Wasser (in der Regel etwa 80 bis 150 Gew.-%, bevorzugt 50 bis 100 Gew.-%, bezogen auf die Harzmenge) und anschließend portionsweise in etwa 30 in durch Trockenmahlung (vorzugsweise ohne Salz als Mahlhilfsmittel) aktiviertes Rohkupferphthalocyaninpigment, das üblicherweise einen α-Kupferphthalocyaningehalt von 5 bis 50 % aufweist, aber auch bis zu 100 % aus α-Kupferphthalocyanin bestehen kann, zu.

Um die Verteilung des Pigments im Harz zu erleichtern, kann man auch Pigmentdispergierhilfsmittel, z.B. solche auf der Basis von Salzen organischer Polysäuren wie Polyacrylsäure oder Maleinsäure/Olefin-Copolymeren, vorzugsweise in Wasser gelöst, zugeben (üblicherweise 0,1 bis 2 Gew.-% Pigmentverteiler, bezogen auf die Pigmentmenge).

Anschlieflend kühlt man die Außenwände des Knettrogs mit Wasser auf etwa 50 bis 80°C ab und knetet noch etwa 1 bis 4 h. Bei dieser Temperatur ist die Viskosität des Harzes deutlich erhöht, und es entstehen hohe Scherkräfte, die eine Einarbeitung des Kupferphthalocyaninpigments in das Harz als feinteiliges β-Kupferphthalocyanin (α-Gehalt im allgemeinen ≤ 10 %) bewirken.

Das Wasser läßt sich danach durch Dekantieren weitgehend entfernen.

Selbstverständlich kann man auf diese Weise auch ein bereits in der β-Modifikation vorliegendes Kupferphthalocyanin in das Harz einarbeiten.

Die so hergestellte Pigment/Harz-Präparation wird dann abgekühlt, gebrochen und auf eine mittlere Teilchengröße von etwa 100 bis 200 µm gemahlen. Hierfür eignet sich z.B. eine Labormühle.

Gegebenenfalls kann man das erhaltene Mahlgut noch nachtrocknen, um eventuell enthaltene Restmengen Wasser zu entfernen.

Anschließend dispergiert man die gemahlene Präparation in für Kugelschreiberpasten üblichen organischen Lösungsmitteln und gibt gewünschtenfalls weitere Zusatzstoffe, insbesondere z.B. die oben angesprochenen Farbstofflösungen, zu.

Die mit Hilfe des erfindungsgemäßen Verfahrens hergestellten blauen Kugelschreiberpasten zeichnen sich durch vorteilhafte Anwendungseigenschaften, insbesondere ihre Dokumentenechtheit und ihre Lagerstabilität, aus.

### Beispiel

770 g eines handelsüblichen neutralen Aldehydharzes wurden 15 in bei einer Thermostattemperatur von 115°C in dem 2,5 l-Knettrog einer Misch- und Knetmaschine LUK 2,5 KSTV der Fa. Werner & Pfleiderer (Stuttgart) mit einer Drehgeschwindigkeit der langsamen Knetschaufel von 50 U/min geknetet. Dann wurde der Knettrog zur Hälfte mit Wasser (etwa 1 l) aufgefüllt, so daß die Knetschaufeln zu etwa 4/5 bedeckt waren. Nach Erhitzen des Wassers auf Siedetemperatur wurden zunächst nach und nach in 30 min 467 g eines durch Trockenmahlung ohne Salz aktivierten Rohkupferphthalocyaninpigments (α-Gehalt 35 %) und anschließend 0,5 ml einer 10 gew.-%igen Lösung des Natriumsalzes eines anionischen Copolymers aus Maleinsäure und einem Olefin (Sokalan®CP 11) in Wasser zugegeben. Nach Abschalten der Thermostatenheizung und Kühlen des Heizmantels auf 65°C wurde noch 3,5 h bei dieser Temperatur geknetet. Dann wurde das Wasser durch Abdekantieren entfernt.

Nach Abkühlen auf Raumtemperatur wurde die erhaltene Präparation gebrochen und 2 min in einer Labormühle gemahlen.

Anschließend wurden 10 g der so zerkleinerten Präparation in 52 g einer 2-Phenoxyethanol/Benzylalkohol-Mischung (Gew.-Verhältnis 1:1) dispergiert.

Die feinteilige Dispersion (Partikelgröße <1 µm) wurde dann noch mit 5 g Olein, 5 g 1,2-Propylenglykol, 6 g einer Mischung aus 48 Gew.-% Methanilgelbsäure und 52 Gew.-% Kristallviolettbase und 22 g des neutralen Aldehydharzes vermischt.

Es wurde eine lagerstabile, dokumentenechte, blaue Kugelschreiberpaste erhalten.

## Patentansprüche

1. Verfahren zur Herstellung von Kugelschreiberpasten, enthaltend ein Phthalocyaninpigment und für Kugelschreiberpasten übliches Harz und organisches Lösungsmittel als wesentliche Komponenten sowie gewünschtenfalls weitere übliche Zusatzstoffe, dadurch gekennzeichnet, daß man ein Phthalocyaninpigment in Gegenwart von Wasser in das Harz einknetet, das Wasser anschließend durch Dekantieren weitgehend entfernt, die abgekühlte Pigment/Harz-Präparation dann mahlt und in dem für die fertige Kugelschreiberpaste eingesetzten organischen Lösungsmittel dispergiert und dabei gewünschtenfalls weitere Zusatzstoffe zugibt.

2. Verfahren nach Anspruch 1, dadurch gekennzeichnet, daß das in der Kugelschreiberpaste enthaltene Phthalocyaninpigment Teilchengrößen von < 1 µm hat.

3. Verfahren nach Anspruch 1 oder 2, dadurch gekennzeichnet, daß das in der Kugelschreiberpaste enthaltene Phthalocyaninpigment Teilchengrößen von 50 bis 500 nm hat.

4. Verfahren nach den Ansprüchen 1 bis 3, dadurch gekennzeichnet, daß das Phthalocyaninpigment ein metallhaltiges oder ein metallfreies Phthalocyanin oder eine Mischung davon ist.

5. Verfahren nach den Ansprüchen 1 bis 4, dadurch gekennzeichnet, daß das in der Kugelschreiberpaste enthaltene Phthalocyaninpigment β-Kupferphthalocyanin ist.

6. Verfahren nach den Ansprüchen 1 bis 5, dadurch gekennzeichnen, daß zur einstellung eines gewünschten Farbtons organische Farbstoffe als Zusatzstoffe eingesetzt werden.

7. Verfahren nach den Ansprüchen 1 bis 6, dadurch gekennzeichnet, daß die Kugelschreiberpaste eine Viskosität von 7 bis 20 Pa·s aufweist.

8. Verfahren nach Anspruch 1, dadurch gekennzeichnet, daß man ein durch Trockenmahlung aktiviertes Kupferphthalocyaninpigment einsetzt, beim Kneten hohen Scherkräften aussetzt und dadurch in feinteiliges β-Kupferphthalocyanin überführt.

## Claims

1. A process for preparing ballpoint pen pastes comprising a phthalocyanine pigment and customary ballpoint pen paste resin and organic solvent as essential components and also, if desired, further customary additives, which comprises kneading a phthalocyanine pigment into the resin in the presence of water, subsequently substantially removing the water by decanting, then grinding the cold pigment-resin preparation and dispersing it in the organic solvent used for the finished ballpoint pen paste while, if desired, adding further additives.

2. A process as claimed in claim 1 wherein the phthalocyanine pigment contained in the ballpoint pen paste has particle sizes of < 1 µm.

3. A process as claimed in claim 1 or 2 wherein the phthalocyanine pigment contained in the ballpoint pen paste has particle sizes from 50 to 500 nm.

4. A process as claimed in any of claims 1 to 3 wherein the phthalocyanine pigment is a metal-containing or a metal-free phthalocyanine or a mixture thereof.

5. A process as claimed in any of claims 1 to 4 wherein the phthalocyanine pigment contained in the ballpoint pen paste is β-copper phthalocyanine.

6. A process as claimed in any of claims 1 to 5 wherein, for achieving a desired hue, organic dyes are used as additives.

7. A process as claimed in any of claims 1 to 6 wherein the ballpoint pen paste has a viscosity of from 7 to 20 Pa·s.

8. A process as claimed in claim 1 wherein a copper phthalocyanine pigment activated by dry grinding is used, exposed to high shearing forces during kneading and so converted into finely divided β-copper phthalocyanine.

## Revendications

1. Procédé de préparation d'encres pour stylos à bille, contenant un pigment phtalocyanine et un solvant organique et une résine utilisés de façon usuelle pour des encres de stylos à bille en tant que composants essentiels, ainsi qu'éventuellement d'autres additifs usuels, caractérisé en ce que l'on malaxe un pigment phtalocyanine avec la résine en présence d'eau, on élimine ensuite l'eau de façon poussée par décantation, on broie la préparation pigment/résine refroidie puis on la disperse dans le solvant organique utilisé pour l'encre pour stylos à bille finie et on ajoute éventuellement d'autres additifs.

2. Procédé selon la revendication 1, caractérisé en ce que le pigment phtalocyanine contenu dans l'encre pour stylos à bille présente une granulométrie < 1 µm.

3. Procédé selon la revendication 1 ou 2, caractérisé en ce que le pigment phtalocyanine contenu dans l'encre pour stylos à bille présente une granulométrie de 50-500 nm.

4. Procédé selon l'une quelconque des revendications 1 à 3, caractérisé en ce que le pigment phtalocyanine est une phtalocyanine contenant du métal ou une phtalocyanine exempte de métal ou un mélange de celles-ci.

5. Procédé selon l'une quelconque des revendications 1 à 4, caractérisé en ce que le pigment phtalocyanine contenu dans l'encre pour stylos à bille est une β-phtalocyanine de cuivre.

6. Procédé selon l'une quelconque des revendications 1 à 5, caractérisé en ce que l'on utilise des colorants organiques, en tant qu'additifs, pour obtenir une nuance déterminée.

7. Procédé selon l'une quelconque des revendications 1 à 6, caractérisé en ce que l'encre pour stylos à bille présente une viscosité de 7-20 Pa.s.

8. Procédé selon la revendication 1, caractérisé en ce que l'on utilise un pigment phtalocyanine de cuivre activé par broyage à sec, on impose des contraintes de cisaillement élevées lors du malaxage et on obtient ainsi de la β-phtalocyanine de cuivre finement divisée.
